(19) Europäisches Patentamt
European Patent Office
Office européen des brevets

(11) **EP 3 215 821 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(21) Anmeldenummer: **15766454.1**

(22) Anmeldetag: **17.09.2015**

(51) Int Cl.:
**G01K 7/02** *(2006.01)*      **G01K 15/00** *(2006.01)*

(86) Internationale Anmeldenummer:
**PCT/EP2015/071291**

(87) Internationale Veröffentlichungsnummer:
**WO 2016/071032 (12.05.2016 Gazette 2016/19)**

(54) **MESSANORDNUNG UMFASSEND EIN ERSTES UND EIN ZWEITES PAAR VON THERMODRÄHTEN**

MEASURING ASSEMBLY COMPRISING A FIRST AND A SECOND PAIR OF THERMOCOUPLE WIRES

DISPOSITIF DE MESURE COMPRENANT UNE PREMIÈRE ET UNE SECONDE PAIRE DE FILS THERMOÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2014   DE 102014116051**

(43) Veröffentlichungstag der Anmeldung:
**13.09.2017   Patentblatt 2017/37**

(73) Patentinhaber: **Endress+Hauser Wetzer GmbH+Co. KG**
**87484 Nesselwang (DE)**

(72) Erfinder: **SAECKER, Dietmar**
**87629 Füssen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
WO-A1-01/06574        JP-A- H1 048 061
JP-A- H10 232 170     JP-A- H10 232 171
JP-A- 2010 256 166    JP-U- 3 177 887
US-B1- 6 344 747

**Beschreibung**

Die Erfindung bezieht sich auf eine Messanordnung und ein Verfahren zum Betreiben einer Messanordnung.

Thermoelemente sind eine Art von Temperatursensor, die in einer großen Vielzahl von Anwendungen verwendet werden. Üblicherweise wird ein Thermoelement aus zwei unterschiedlichen Elementen, die an einer Verbindungsstelle miteinander verbunden sind, gebildet. Das Prinzip, auf dem ein Thermoelement arbeitet, ist, dass eine Spannung oder elektromotorische Kraft an der Verbindungsstelle, zu englisch: hot junction, der beiden ungleichen Elemente, auftritt. Diese Verbindungsstelle ist dabei im Bereich einer Messstelle deren Temperatur gemessen werden soll angeordnet oder damit zumindest in thermischem Kontakt.

Die Thermodrähte werden aus Gründen der elektrischen Isolierung und auch zum Schutz vor störenden äußeren Einflüssen in ein Material eingebettet, das zur elektrischen Isolierung zwischen den Thermodrähten und/oder gegenüber der Umgebung der Thermodrähte dient.

Mit der Zeit können Thermoelemente Änderungen in der Zusammensetzung aufgrund betrieblicher Belastungen erfahren. Aufgrund dieser Änderungen entspricht die gemessene Thermospannung nicht der tatsächlich vorliegenden Temperatur. Änderungen in der Zusammensetzung eines Thermoelements werden im Allgemeinen durch den Begriff Abbau bezeichnet. Dieser Abbau kann in der Bereitstellung von ungenauen Temperaturmessungen führen.

Wenn ein Thermoelement einen derartigen Abbau erlitten hat, ist ein Betreiber eines temperaturabhängigen Prozess, in dem das Thermoelement verwendet wird, unter Umständen nicht in der Lage diesen Abbau zu erkennen. Andererseits kann der Betreiber aus Erfahrung heraus wissen, dass die Temperaturmessung außerhalb eines normalen Temperaturbereichs liegt, in dem der Prozess normalerweise betrieben wird und so auf einen Abbau der Thermodrähte schließen. Durch Alterungsprozesse während des Einsatzes kann die thermoelektrische Homogenität jedoch stark verschlechtert werden (Temperaturmessfehler von 1 K bis 100 K sind möglich). Jedoch kann der Betreiber in einigen Fällen nicht in der Lage sein zu erkennen, dass ein Thermoelement sich verschlechtert hat, da vielfältige Fehlerquellen vorliegen können. Ferner ist der Betreiber in der Regel nicht in der Lage, die Anfangsphase des Abbaus eines Thermoelements zu erkennen.

Entsprechend ist es aus dem Stand der Technik, wie bspw. aus der Patentschrift US 6344747 B1, bekannt geworden, den Widerstand verschiedener Messstellen zu diesem Zweck miteinander zu vergleichen.

Ferner ist es bekannt geworden eine spezielle Isolierung zum Schutz vor eindringenden Substanzen, wie bspw. einem Bestandteil des Messstoffs, aus der Umgebung zu verwenden.

Dabei ist die Strecke, die die Thermodrähte geführt werden, für die Sensorleistung und - haltbarkeit, insbesondere bei bspw. mineralisolierten Thermodrähten, entscheidend. Es sollte daher möglichst vermieden werden, die Thermodrähte durch heiße Zonen, wie sie bspw. im Bereich eines Ofens auftreten, zu führen. Die Nichteinhaltung dieser Maßnahmen betreffend die Strecke, entlang derer die Thermodrähte geführt werden, erhöht die Wahrscheinlichkeit einer fehlerhaften Messung infolge eines sog. virtual junction error - d.h. einer parasitären Thermospannung. Denn durch in die Isolierung der Thermodrähte oder zu den Thermodrähten selbst vordringende Substanzen aus dem Messstoff oder einem Abtrag des Materials, aus dem die Thermodrähte bestehen, kann es zu einer leitfähigen Verbindung zwischen den Thermodrähten kommen, der nicht an der Verbindungsstelle, d.h. der eigentlichen Messstelle, liegt. Dieser Kurzschluss führt zu einem verfälschten Messsignal, da er für das Auftreten einer (parasitären) Spannung sorgt, die sich mit derjenigen, die von der Messstelle resultiert, überlagert. Bspw. im Fall eines Brenners mit einem von dem Brennraum beabstandeten Feuerungsraums kann es vorkommen, dass die Thermodrähte auf der Strecke zu einer Messstelle im Brennraum höheren Temperaturen ausgesetzt sind. Weitere Lösungen zur Erkennung des Abbaus eines Thermoelementes sind aus dem Stand der Technik, wie bspw. aus den Patentschriften WO01/06574 A1, US6344747B1, JP3177887U, JPH1048061A, JPH10232171A, JP2010256166A und JPH10232170A, bekannt geworden. Der Erfindung liegt die Aufgabe zugrunde, eine genauere Messung und/oder zuverlässigere Messung einer Temperatur zu ermöglichen, insbesondere bei Anwendungen bei denen die Temperatur an zumindest einer Stelle entlang des Verlaufs der Thermodrähte die Temperatur an der Verbindungsstelle übertrifft, oder in dem Fall dass es zu einem Abbau der Thermodrähte gekommen ist.

Die Aufgabe wird durch eine Messanordnung nach Anspruch 1 und ein Verfahren zum Betreiben einer Messanordnung nach Anspruch 13. gelöst. Hinsichtlich der Messanordnung wird die Aufgabe durch eine Messanordnung umfassend ein erstes Paar von Thermodrähten gelöst, wobei die beiden Thermodrähte des ersten Paares vollständig durch einen Isolator, wie bspw. ein Material, das zur elektrischen Isolierung zwischen den beiden Thermodrähten des ersten Paares dient, voneinander getrennt sind.

Bei der Messanordnung kann es sich um eine Messanordnung, die primär zur Bestimmung der Temperatur, wie bspw. ein Thermometer, dient, handeln.

Um ein Thermoelement herzustellen, werden üblicherweise zwei thermoelektrisch wirksame Leiter (Thermopaar), bspw. an einem ihrer Enden, elektrisch (unmittelbar) miteinander verbunden (Verbindungsstelle). Es ist jedoch auch bekannt geworden einen elektrischen Leiter zu verwenden, über den die Enden des Thermopaars (mittelbar) miteinander verbunden sind. An den anderen Enden (Vergleichsstelle) schließt man Anschlussleitungen, bspw. Kupferleitungen an, die zu einer Auswerteschaltung, wie bspw. einem Spannungsmessgerät, führen. Die Verbindungsstelle, die im Bereich einer gewünschten Messstelle angeordnet wird, wird der zu messenden Temperatur ausgesetzt, während die Vergleichsstelle auf einer bspw. konstanten bekannten Bezugstemperatur gehalten. Die gemessene Thermospannung entspricht der Temperaturdifferenz zwischen der Verbindungsstelle (hot junction) und Vergleichsstelle (cold junction), wobei ihre Höhe noch u.a. von der Materialkombination des Thermopaares abhängig ist. Dabei müssen die Thermodrähte zum Schutz vor gegenseitiger Berührung elektrisch isoliert sein. Die Isolationsmaterialien bestimmen die obere Einsatztemperatur des Thermoelements mit (Baumwolle oder Seide bis 120°C, Lack oder Silikongummi bis 180°C, Kunststoffe bis 260 °C). Für höhere Temperaturen werden Schutz- und Isolierrohre bzw. Fasermaterialien aus Quarzglas (bis 1000°C) oder Keramik (bis ca. 2000 °C) verwendet.

Es wird vorgeschlagen ein erstes Paar Thermodrähte vorzusehen, das keine Verbindungsstelle aufweist, also nicht elektrisch miteinander verbunden ist, um eine Verbindungsstelle zu bilden. Bspw. können zwei, sich nicht berührende bzw. voneinander beabstandete Thermodrähte, die durch den Isolator voneinander getrennt sind, zu verwenden. Somit weist das erste Paar von Thermodrähten keine Verbindungsstelle auf. Die Thermodrähte können jedoch entweder direkt oder über Anschlussdrähte, die mit den Thermodrähten verbunden sind, an einer Vergleichsstelle bspw. über eine Auswerteschaltung elektrisch miteinander verbunden sein, bspw. um eine erste (parasitäre) Spannung, die zwischen dem ersten Paar von Thermodrähten vorliegt zu bestimmen. Aufgrund dieser ersten Spannung kann ein Zustand der Messanordnung und insbesondere der Abbau der Thermodrähte bestimmt werden.

Bei dem Isolator kann es sich um eines der oben genannten Materialien oder Materialkombinationen handeln. Die beiden Thermodrähte des ersten Paares von Thermodrähten sind somit durch diesen Isolator -entlang ihres gesamten Verlaufsvoneinander getrennt. Das erste Paar von Thermodrähten ist dabei zumindest in dem Bereich, in dem es in den Isolator eingebettet ist, voneinander getrennt

In der erfindungsgemäßen Messanordnung weisen die beiden Thermodrähte des ersten Paares daher keine Verbindungsstelle, die zur Bestimmung der Temperatur dient, auf. Vorzugsweise sind die Thermodrähte also nicht elektrisch miteinander verbunden, sondern weisen freie Enden die in den Isolator eingebettet sind auf.

In der erfindungsgemäßen Messanordnung dienen die beiden Thermodrähte des ersten Paares dazu, eine erste, insbesondere parasitäre, Thermospannung, bspw. als Referenzspannung für eine zweite Thermospannung, zu erfassen. Bspw. kann die zwischen dem ersten Paar von Thermodrähten vorliegende Thermospannung bestimmt werden. Dies kann bspw. durch die Messung der Leitungswiderstand des ersten bzw. des zweiten Thermodrahtes oder der Isolationswiderstand zwischen dem ersten und dem zweiten Thermodraht, die das erste Paar von Thermodrähten bilden, gemessen werden. Dieser, bspw. vermittels einer Auswerteschaltung, gemessene Widerstand kann dann mit einem oder mehreren Schwellenwert verglichen werden. In Abhängigkeit dieses Vergleichs kann dann eine entsprechende Diagnosemeldung, die den Zustand der Messanordnung, bzgl. des Abbaus oder der Alterung der verwendeten Thermodrähte angibt, ausgegeben werden.

In der erfindungsgemäßen Messanordnung weist die Messanordnung ein zweites Paar von Thermodrähten auf, wobei die beiden Thermodrähte des zweiten Paares an einer Verbindungstelle elektrisch miteinander verbunden sind, und dazu dienen, eine zweite Thermospannung bereitzustellen. Das zweite Paar von Thermodrähten kann also zur Erfassung der Temperatur dienen, während das erste Paar von Thermodrähten zur Überwachung der Messanordnung, genauer des zweiten Paares von Thermodrähten, dient. Die erste und die zweite Thermospannung können zudem miteinander verglichen werden.

In der erfindungsgemäßen Messanordnung ist das erste Paar von Thermodrähten elektrisch von dem zweiten Paar von Thermodrähten isoliert. Zu diesem Zweck kann bspw. der gleiche Isolator bzw. das gleiche Material wie zur elektrischen Isolation zwischen den Thermodrähten des ersten Paars von Thermodrähten verwendet werden.

In der erfindungsgemäßen Messanordnung ist eine Auswerteschaltung vorgesehen ist, die dazu dient, die erste Thermospannung und die zweite Thermospannung zu erfassen. Bspw. kann die Auswerteschaltung, insbesondere abwechselnd, sowohl mit dem ersten Paar von Thermodrähten und dem zweiten Paar von Thermodrähten verbunden sein, um die ersten und/oder die zweite Thermospannung zu bestimmen.

In einer weiteren Ausführungsform der Messanordnung verläuft das zweite Paar von Thermodrähten entlang einer Wegstrecke, und wobei das erste Paar von Thermodrähten entlang zumindest eines Teils dieser Wegstrecke, vorzugsweise bis zur Verbindungsstelle des zweiten Paares von Thermodrähten, verläuft. Die erste und die zweite Wegstrecke verlaufen dabei vorzugsweise parallel. Dadurch werden das erste und das zweite Paar von Thermodrähten im Wesentlichen denselben Umgebungsbedingungen ausgesetzt. Die beiden Thermopaare unterliegen damit denselben umgebungsbedingten Alterungserscheinung und demselben Abbau. Die Wegstrecke kann dabei durch den Verlauf des zweiten Paars von Thermodrähten zwischen der Auswerteschaltung und der Verbindungsstelle des zweiten Paars von Thermodrähten vorgegeben sein.

In einer weiteren Ausführungsform der Messanordnung sind das erste und das zweite Paar von Thermodrähten in ein elektrisch isolierendes Material eingebettet. Dabei kann es sich bspw. um ein, insbesondere keramisches, vorzugsweise feuerfestes, Füllmaterial handeln. Das erste und das zweite Paar von Thermodrähten sind dabei vorzugsweise vollständig von diesem Material umgeben.

In einer weiteren Ausführungsform der Messanordnung ist das isolierende Material von einer, vorzugsweise metallischen, Hülse umgeben. Das erste und/oder das zweite Paar von Thermodrähten sind dabei ebenfalls in dieser Hülse angeordnet und in das elektrisch isolierende Material eingebettet. Die Hülse bildet dabei bspw. einen sog. Messeinsatz der in ein Schutzrohr eingeführt oder direkt dem Messstoff dessen Temperatur bestimmt werden soll ausgesetzt wird. Das erste und das zweite Paar von Thermodrähten können dabei entlang der Länge der Hülse im Wesentlichen parallel zueinander bis zu einer als Messspitze dienendem Ende der Hülse verlaufen.

In einer weiteren Ausführungsform der Messanordnung wobei die Hülse in einem Schutzrohr angeordnet ist. Das Schutzrohr ist bspw. mit einem den Messstoff führenden Behälter verbunden. Dabei ist das Schutzrohr so ausgestaltet, dass es die als Messeinsatz dienende Hülse aufnehmen kann. Bspw. kann das als Messspitze dienende Ende des Messeinsatzes mit dem Boden auf der Innenseite des Schutzrohres in Kontakt kommen.

In einer weiteren Ausführungsform der Messanordnung sind zumindest drei Thermodrähte vorgesehen, wobei ein erster und ein zweiter dieser drei Thermodrähte das erste Paar bilden, und wobei der erste und ein dritter dieser drei Thermodrähte das zweite Paar bilden. Somit kann eine Messanordnung, die aus drei Thermodrähten besteht, gebildet werden. Dabei sind zwei dieser Thermodrähte an einer Verbindungsstelle elektrisch miteinander verbunden, während ein dritter Thermodraht vollständig getrennt von dem ersten und dem zweiten Thermodraht verläuft. Die Auswerteschaltung kann dann dazu dienen, die erste Thermospannung zwischen dem ersten und dem dritten Thermodraht zu messen und die zweite Thermospannung zwischen dem ersten und dem zweiten Thermodraht zu messen.

In einer weiteren Ausführungsform der Messanordnung sind vier Thermodrähte vorgesehen, wobei ein erster und ein zweiter dieser vier Thermodrähte das erste Paar bilden, und ein dritter und ein vierter dieser vier Drähte das zweite Paar bilden. Die Messanordnung kann somit aus vier Thermodrähten bestehen.

In einer weiteren Ausführungsform der Messanordnung dient die erste Thermospannung dazu, eine Diagnosemeldung bzgl. des Zustands des zweiten Paars an Thermodrähten bzw. eines Messsignals zu erzeugen. Allgemein kann das erste Paar von Thermodrähten dazu dienen eine Aussage über die Auswirkungen eines Prozess und die damit verbundenen Sensoren, insbesondere auf den Abbau eines Thermoelemente, zu bestimmen oder vorherzusagen.

In einer weiteren Ausführungsform der Messanordnung dient die erste Thermospannung zur Korrektur eines in der zweiten Thermospannung enthaltenen Fehleranteils, welcher Fehleranteil insbesondere auf dem Vorliegen einer virtuellen Vergleichsstelle (parasitäres Thermoelement) zwischen dem zweiten Paar an Thermodrähten beruht. Wie eingangs erläutert, kann es nämlich zu einem Abbau der Thermodrähte kommen, die zu einer parasitären Thermospannung führt. Andererseits kann die parasitäre Thermospannung durch chemische und/oder physikalische Eigenschaften, also insbesondere reversible Effekte, des keramischen Materials bei steigender Temperatur hervorgerufen werden.

In einer weiteren Ausführungsform der Messanordnung bildet das erste Paar von Thermodrähten einen ersten Messkanal, und wobei das zweite Paar von Thermodrähten einen zweiten Messkanal bildet, und wobei die Auswerteschaltung mit dem ersten und/oder dem zweiten Messkanal verbindbar ist. Die Auswerteschaltung kann somit derart ausgelegt, dass sie zur Erfassung und/oder Verarbeitung des über den ersten und über den zweiten Messkanal abgegriffenen Messsignale dient.

In einer weiteren Ausführungsform der Messanordnung dient die Auswerteschaltung, dazu, einen der Temperatur entsprechenden Spannungsanteil der zweiten Thermospannung als Messsignal zu erfassen.

In einer weiteren Ausführungsform der Messanordnung dient die Auswerteschaltung dazu, einen elektrischen Widerstand des zweiten Paars von Thermodrähten zu ermitteln. Dabei kann es sich um den Isolationswiderstand zwischen den beiden Thermodrähten des ersten Paares von Thermodrähten handeln.

In einer weiteren Ausführungsform der Messanordnung dient die Auswerteschaltung dazu, einen elektrischen Widerstand des ersten Paars von Thermodrähten zu erfassen. Dabei kann es sich um den Leitungswiderstand entweder des ersten und/oder des zweiten Thermodrahtes des ersten Paars von Thermodrähten handeln.

In einer weiteren Ausführungsform der Messanordnung dient die Auswerteschaltung ferner dazu, die zweite Thermospannung und den elektrischen Widerstand des zweiten Paares und den elektrischen Widerstand des ersten Paares von Thermodrähten ereignisbezogen oder entsprechend einer zeitlichen Vorgabe, bspw. wiederkehrend, zu erfassen. Bspw. kann die Bestimmung der zweiten Thermospannung, insbesondere vermittels der Auswerteschaltung, erfolgen, wenn gerade kein Messwert der Temperatur benötigt wird, wie bspw. bei einem Batch-Prozess. Die Bestimmung der ersten Thermospannung kann auch entsprechend eines vorgegebenen Zeitplans, bspw. einmal alle 24 Stunden, erfolgen. Die Bestimmung kann auch bspw. in einem Bestimmten Messbereich, bspw. wenn die zweite Thermospannung einer Temperatur von über 300°, 600° oder 1200° C liegt, erfolgen.

In einer weiteren Ausführungsform der Messanordnung dient die Auswerteschaltung ferner dazu, die, vorzugsweise während des Betriebs der Messanordnung ermittelten Werte der ersten Thermospannung, den elektrischen Widerstand des ersten Paares und/oder den elektrischen Widerstand des zweiten Paares von Thermodrähten, mit zumindest einem hinterlegten Wert zu vergleichen. Die Schwellenwerte können bspw. das Vorliegen einer unterschiedlich starken Abbaus der des zweiten Paar von Thermodrähten kennzeichnen.

Hinsichtlich des Verfahrens wird die Aufgabe durch ein Verfahren zum Betreiben einer erfindungsgemäßen Messanordnung gelöst, wobei die erste, insbesondere parasitäre, Thermospannung, bspw. als Referenzspannung für eine zweite Thermospannung, vermittels des ersten Paares von Thermodrähten erfasst wird. Die zweite Thermospannung kann dabei bspw. vermittels des zweiten Paars von Thermodrähten ermittelt werden. Es ist auch denkbar, eine Schaltung vorzusehen, die einerseits dazu dient, das erste Paar von Thermodrähten an einer Verbindungsstelle, die als Messstelle dient, miteinander zu verbinden und andererseits diese Verbindung zu trennen, so dass die beiden Thermodrähte des ersten Paars von Thermoelementen elektrisch durch einen Isolator getrennt voneinander sind.

In dem erfindungsgemäßen Verfahren wird eine zweite Thermospannung vermittels des zweiten Paars von Thermodrähten, welches zweite Paar von Thermodrähten an einer Verbindungsstelle elektrisch miteinander verbunden ist, erfasst.

In dem erfindungsgemäßen Verfahren wird vermittels einer Auswerteschaltung die erste, insbesondere parasitäre, Thermospannung und/oder die zweite Thermospannung erfasst. Bei dem Abgriff der Spannung zwischen dem ersten Paar von Thermodrähten wird dabei im Wesentlichen nur die parasitäre Thermospannung bzw. der Isolationswiderstand zwischen dem ersten Paar von Thermodrähten erfasst. Bei dem Abgriff zwischen den beiden Thermodrähten des zweiten Paars von Thermodrähten wird sowohl die eigentliche Thermospannung als auch die parasitäre Thermospannung, die sich mit der eigentlichen Thermospannung überlagert, erfasst.

In einer weiteren Ausführungsform des Verfahrens wird eine Diagnosemeldung bzgl. des Zustands des zweiten Paars von Thermodrähten anhand der ersten, insbesondere parasitären, Thermospannung ermittelt. In Abhängigkeit der Größe der ersten, insbesondere parasitären, Thermospannung kann, insbesondere wenn ein vorgegebener Schwellenwert überschritten wurde, eine entsprechende Warnung an einen Benutzer, wie bspw. den Anlagenbetreiber, ausgegeben werden.

In einer weiteren Ausführungsform des Verfahrens wird ein in der zweiten Thermospannung enthaltener Fehleranteil vermittels der ersten, insbesondere parasitären, Thermospannung bestimmt. Somit kann die erste Thermospannung oder ein daraus abgeleitetes Messsignal bzw. eine daraus abgeleiteter Messwert korrigiert werden.

In einer weiteren Ausführungsform des Verfahrens wird der Fehleranteil zur Korrektur eines anhand der zweiten Thermospannung bestimmten Messsignals verwendet, welcher Fehleranteil, insbesondere auf dem Vorliegen einer virtuellen Vergleichsstelle (parasitäres Thermoelement) zwischen den Thermodrähten des zweiten Paars an Thermodrähten beruht.

Die Erfindung wird anhand der nachfolgenden Zeichnungen näher erläutert. Es zeigt:

Fig. 1: eine schematische Darstellung einer Messanordnung, wie sie bspw. in einem Brennofen, bei dem bspw. Feuerungsraum und Brennraum getrennt voneinander sind, vorliegt,

Fig. 2a: eine schematische Darstellung eines Thermoelements mit einer Verbindungsstelle, über welche das Thermoelement eine geschlossene Leitung bildet,

Fig. 2b: ein schematisches Schaltbild des Thermoelements aus Fig. 2a,

Fig. 3a: eine schematische Darstellung eines Thermoelements, mit einer Verbindungsstelle und einer virtuellen Vergleichsstelle, durch welche virtuelle Vergleichsstelle eine parasitäre Thermospannung hervorgerufen wird,

Fig. 3b: ein Ersatzschaltbild des Thermoelements aus Fig. 3a,

Fig. 4: eine schematische Darstellung des Verlaufs des Isolationswiderstands einer mineralisolierten Mantelleitung als Funktion der Temperatur,

Fig. 5: eine schematische Darstellung des Messfehlers in der Thermospannung als Funktion des Isolationswiderstands,

Fig. 6a: eine schematische Darstellung eines ersten und eines zweiten Paares von Thermodrähten bei denen es aufgrund einer virtuellen Vergleichsstelle zu einer parasitären Thermospannung kommt,

Fig. 6b: ein Ersatzschaltbild des zweiten Paars von Thermodrähten aus Fig. 6a, die eine Verbindungsstelle aufweisen,

Fig. 6c: ein Ersatzschaltbild des ersten Paars von Thermodrähten aus Fig. 6a, welches zweite Paar von Thermodrähten keine Verbindungsstelle aufweist.

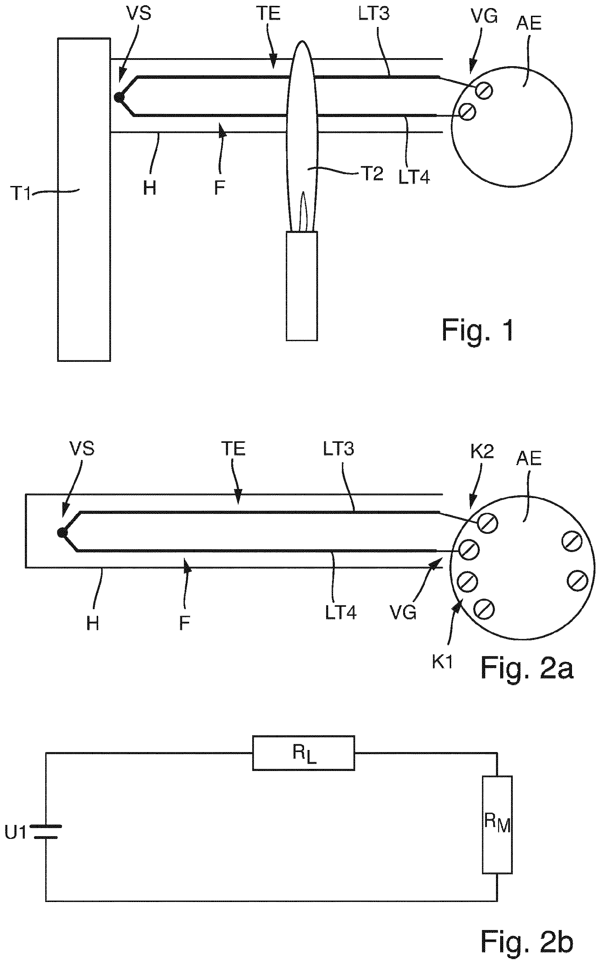

Figur 1 zeigt ein Thermoelement TE, das einen ersten und einen zweiten Thermodraht LT3, LT4 umfasst. Die beiden Drähte LT3, LT4 sind an einem ihrer Enden, der sog. Verbindungsstelle (hot junction) VS miteinander galvanisch verbunden, bspw. gelötet. Die Verbindungsstelle VS muss dabei nicht zwingend an einem der Enden der Thermodrähte LT3, LT4 liegen. Diese Verbindungsstelle VS bildet zugleich die Messstelle, an der die Temperatur T1 erfasst werden soll. Zudem muss die Verbindungstelle VS nicht an einem Ende einer als Messeinsatz dienenden Hülse H liegen, in der die Thermodrähte LT3, LT4 angeordnet sind. Die Verbindungsstelle VS kann auf einer beliebigen Höhe entlang des Verlaufs der Hülse H angeordnet sein.

An dem der Verbindungsstelle VS gegenüberliegenden Ende der Hülse H sind die Thermodrähte LT3, LT4 mit einer Auswerteschaltung AE, die zugleich die Vergleichsstelle (cold junction) VG bildet, bspw. über Anschlussklemmen verbunden. Liegt eine Temperaturdifferenz zwischen der Verbindungsstelle VS und der Vergleichsstelle VG vor, so ergibt sich an der Vergleichsstelle VG eine Thermospannung, die vermittels der Auswerteschaltung AE gemessen werden kann. Bei der Auswerteschaltung AE handelt es sich bevorzugt um einen Temperaturtransmitter.

Vorliegend ist beispielhaft die Oberfläche eines Behälters B in dem sich eine Messstoff befindet dargestellt. Es sind jedoch auch andere Anwendungen wie bspw. ein Schutzrohr, das in den Behälter B mit dem Messstoff hineinragt, bekannt geworden. Dabei wird der Messeinsatz in das Schutzrohr eingeführt und kommt mit dessen Boden in Kontakt.

Die Thermodrähte LT3, LT4 sind vorliegend in der Hülse H, die mit einem Isolator F, wie bspw. einer Mineralisolierung, wie bspw. MgO oder $Al_2O_3$, gefüllt ist, angeordnet. Bspw. kann es sich dabei um ein mineralisoliertes Kabel handeln.

Insbesondere in Feuerungsräumen kommt es vor, dass die Thermodrähte LT3, LT4 auf der Strecke zwischen der Auswerteschaltung AE bzw. der Vergleichsstelle VG und der Verbindungsstelle VS, die als Messstelle dient, unter Umständen höheren Temperaturen T2 als an der Messstelle T1 ausgesetzt sind. Dies kann bspw. bei einem Brennofen mit einem von Brennraum getrennten Feuerungsraum der Fall sein. Die gegenüber der Messstelle erhöhte Temperatur T2 ist durch die stilisierte Flamme in Figur 1 symbolisch dargestellt. In einer solchen Situation wird eine höhere Thermospannung und somit eine höhere Temperatur gemessen, als sie tatsächlich an der Messstelle vorliegt. Durch die vorliegende Erfindung soll eine genauere Messung der Temperatur T1 vermittels eines Thermoelements TE bereitgestellt werden, die diesen Fehler vermeidet. Zudem kann durch die vorgeschlagene Erfindung eine Diagnose eines Thermoelements TE zur Beurteilung der Zuverlässigkeit der Messung und der Ausfallwahrscheinlichkeit des Thermoelements TE bzw. der verwendeten Thermodrähte LT3, LT4 durchgeführt werden.

Figur 2a zeigt einen Messeinsatz, der ein Thermoelement TE wie in Zusammenhang mit Figur 1 beschrieben, umfasst, welcher Messeinsatz mit einer Auswerteschaltung AE verbunden ist. Der Messeinsatz umfasst dabei die beiden Thermodrähte LT3, LT4 eine Hülse H und einen Isolator F mit dem die Hülse H zumindest zum Teil gefüllt ist und in welchen Isolator F die Thermodrähte LT3, LT4 eingebettet sind. In Figur 2b ist ein Ersatzschaltbild der Messanordnung aus Figur 2a gezeigt. Aufgrund der Temperaturdifferenz zwischen der Verbindungsstelle VS der Thermodrähte LT3, LT4 und der Vergleichsstelle VG ergibt sich eine Thermospannung U1. Es wird dabei angenommen, dass die Thermospannung U1 aufgrund der Temperaturdifferenz zwischen der Temperatur an der Verbindungsstelle VS, die an der Spitze der Hülse H angeordnet ist, und der Temperatur an der Vergleichsstelle VG entsteht.

Ferner enthält das Ersatzschaltbild den Leitungswiderstand $R_L$ der Thermodrähte LT3, LT4 und den Innen- oder Messwiderstand $R_M$ der Auswerteschaltung AE. Leitungswiderstand $R_{ISO}$ und Innenwiderstand $R_M$ sind dabei in Reihe zur als Spannungsquelle dargestellten Thermospannung U1 angeordnet.

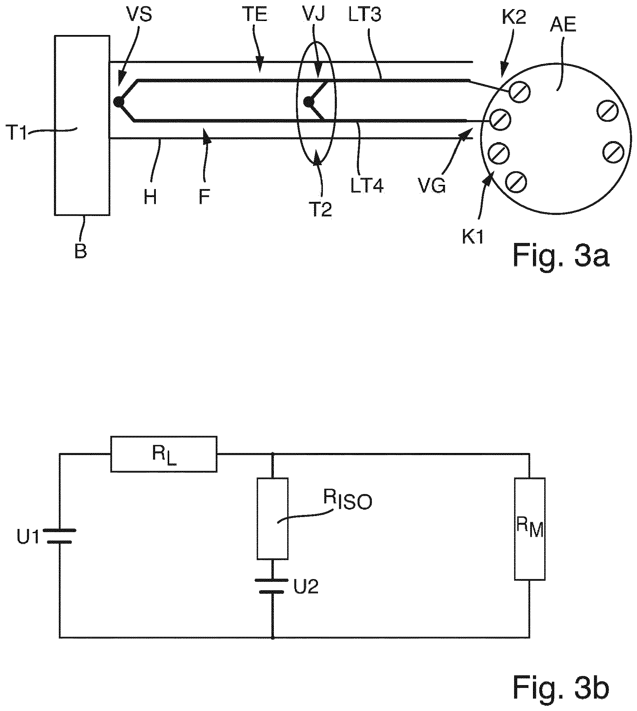

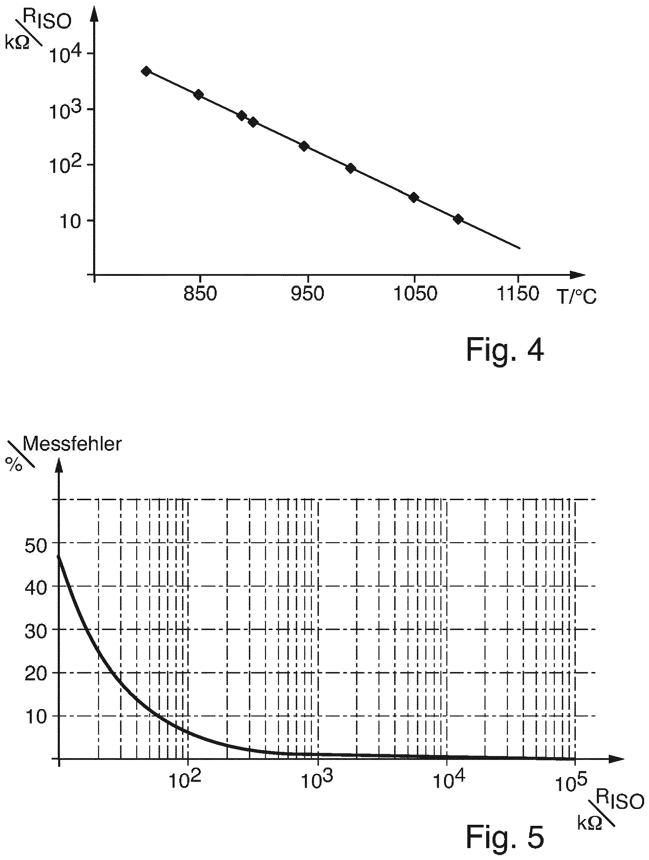

In Figur 3a ist ein durch die Temperatur zwischen der Verbindungsstelle VS und der Vergleichsstelle VG vorliegende leitende Verbindung zwischen den Thermodrähten LT3, LT4 dargestellt. Dies beruht, wie oben geschildert, darauf, dass die Thermodrähte LT3, LT4 ggf. samt Hülse H in der sie angeordnet sind, ein bestimmte Strecke ausgehend von der Vergleichsstelle VG oder Auswerteschaltung AE bis zur Messstelle durch eine Installation wie bspw, eine industrielle Anlage, geführt werden. Durch eine an einer Stelle der Installation vorliegende erhöhte Temperatur T2 sinkt der Isolationswiderstand $R_{ISO}$ des Isolators F zwischen den Thermodrähten LT3, LT4 unter Umständen so stark ab, dass eine zusätzliche leitende Verbindung zwischen den Thermodrähten LT3, LT4 am Ort der erhöhten Temperatur T2 entsteht. Die wird auch als "virtual junction" VJ bezeichnet. Dabei sinkt der Widerstand $R_{ISO}$ des als Isolator F verwendeten Materials bspw. von einigen Giga-Ohm mit ca. einer Zehnerpotenz pro 100° Temperaturdifferenz, wie in Figur 4 dargestellt, ab. Ein entsprechender Verlauf ergibt sich bei anderen bekannten und für die Isolierung von Thermodrähten LT3, LT4 verwendeten Materialien wie Glas oder $Al_2O_3$. Der Einfluss des sinkenden Isolationswiderstandes $R_{ISO}$ und damit die Bedeutung einer sich daraus ergebenden parasitären Thermospannung U2 auf das vermittels der Auswerteschaltung AE, wie bspw. eines Transmitters, erfasste Messsignal kann jedoch mittels der Thermodrähte LT1, LT2 bestimmt werden.

Der aus der parasitären Thermospannung U2 resultierende Messfehler in % ist als Funktion des Isolationswiderstandes zw. den Thermodrähten in Figur 5 dargestellt. Bei geringem Isolationswiderstand $R_{ISO}$ des Isolators zwischen den Thermodrähten LT3, LT4 ist somit ein entsprechend hoher Messfehler gegeben. Bei einem Isolationswiderstand $R_{ISO}$ von 30 Ohm ergibt sich demgemäß ein Messfehler von 20%. Mittels eines geeigneten Isolationswiderstands $R_{ISO}$ lässt sich dieser Fehler minimieren und wenn entsprechend höhere Isolationswiderstände durch geeignete Materialien erreicht werden. Dafür geeignete Materialien wie bspw. Bornitrid oder Berylliumoxid sind jedoch entweder sehr teuer oder toxisch.

Figur 3b zeigt ein Ersatzschaltbild der Messanordnung gem. Figur 2a. Die virtuellen Vergleichsstelle VJ ergibt besteht dabei aus dem Isolationswiderstand $R_{ISO}$ und der parasitären Thermospannung U2. Der Isolationswiderstand $R_{ISO}$ ist parallel zum Messwiderstand $R_M$ angeordnet, während die parasitäre Spannung U2, im Ersatzschaltbild als Spannungsquelle dargestellt, parallel zur eigentlichen Messspannung U1, ebenfalls als Spannungsquelle dargestellt, angeordnet ist.

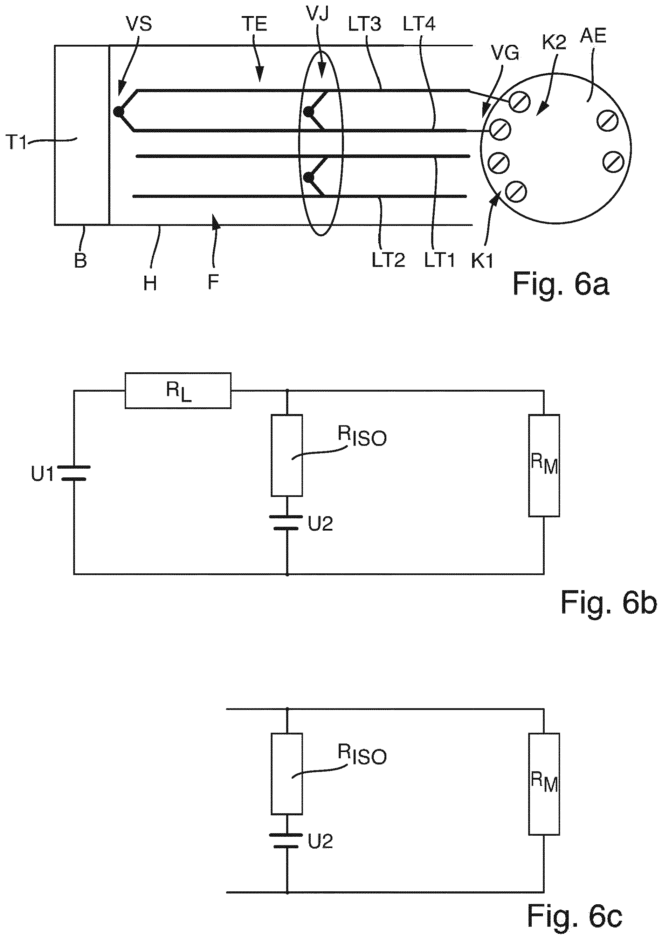

In Figur 6a ist eine Anordnung von Thermodrähten LT1, LT2, LT3, LT4 gezeigt, durch die ein Abbau der Thermodrähte LT3, LT4 und/oder ein sinkender Isolationswiderstand $R_{ISO}$ zwischen den Thermodrähten LT3, LT4, kompensiert werden kann.

Dabei wird vorliegend eine mineralisolierte Leitung verwendet, in die z.B. zweimal Typ K, Thermoelemente eingebettet sind, wobei allerdings nur zwischen einem Paar von Thermodrähten LT3, LT4 eine Verbindungsstelle VS gebildet wird. Ein auftretender Messfehler kann dann mittels eines Temperaturtransmitters AE, mit dem die Thermodrähte LT3, LT4 verbunden sind, rechnerisch kompensiert werden.

Ein erstes Paar von Thermodrähten LT1, LT2, die nicht miteinander verbunden sind, bildet dabei eine offene Leitung. Vermittels dieses ersten Paares LT1, LT2 wird ein ggf. auftretendes parasitäres Thermoelement VJ bestimmt.

Ein zweites Paar von Thermodrähten LT3, LT4, die an einer Verbindungsstelle VS miteinander verbunden sind, bildet dabei eine geschlossene Leitung. In dieser geschlossenen Leitung bildet sich neben dem messenden Thermoelement unter Umständen auch das parasitäre Thermoelement VJ. Anstelle der hier gezeigten vier Thermodrähte LT1, LT2, LT3, LT4 kann eine erfindungsgemäße Anordnung auch nur aus einem eine einzigen Paar von Thermodrähten LT1, LT2 bestehen, die nicht miteinander verbunden sind. Ebenfalls ist eine Ausführung mit nur drei Thermodrähten möglich wobei zwei dieser Thermodrähte das erste Paar LT1, LT3 und zwei der Thermodrähte LT3, LT4 das zweite Paar bilden.

Die Thermodrähte LT1, LT2, die das erste Paar bilden, sind in dem Bereich in dem sie in der Hülse H angeordnet sind vollständig voneinander durch einen Isolator F getrennt. Vorliegend verlaufen das erste und das zweite Paar von Thermodrähten LT1, LT2, LT3, LT4 entlang der gesamten Länge der Hülse H beabstandet voneinander in der Hülse H. Der Temperaturtransmitter AE kann verschiedene Eingänge K1, K2 aufweisen und zur Messsignalverarbeitung bspw. zw. diesen Eingängen, auch als Kanäle bezeichnet, umschalten. Dabei kann ein erster Eingang K1 mit dem ersten Paar LT1, LT2 und ein zweiter Eingang K2 mit dem zweiten Paar von Thermodrähten LT3, LT4 verbunden sein. Vermittels des Transmitters AE kann eine Widerstandsmessung und/oder eine Spannungsmessung zwischen den an dem jeweiligen Eingang K1, K2 angeschlossenen Thermodrähten LT1, LT2 bzw. LT3, LT4 erfolgen. Die Eingänge K1, K2 des Transmitters AE können insbesondere abwechselnd abgetastet werden. Dies kann entsprechend eines vorgegebenen Ablaufplans, der bspw. in einer Software des Transmitters AE hinterlegt ist, erfolgen.

Auf dem zweiten Eingang K2 des Transmitters, der einen zweiten Messkanal bildet, kann die Gesamtspannung zwischen dem zweiten Paar von Thermodrähten LT3, LT4 und/oder der Leitungswiderstand $R_L$ der geschlossenen Leitung gemessen werden. Der Widerstand $R_L$ der geschlossenen Leitung kann dabei mit einer ersten Polarität und anschließen mit umgekehrter Polarität bestimmt und anschließend gemittelt werden.

Auf dem ersten Eingang K1des Transmitters, der einen ersten Messkanal bildet, kann der Isolationswiderstand $R_{ISO}$ zwischen dem ersten Paar von Thermodrähten LT1, LT2 gemessen werden. Wenn dieser unter einen vorgegebenen Schwellenwert, von bspw. 1000 Ohm, fällt, kann entweder eine entsprechende Meldung ausgegeben und/oder eine Kompensation des Messsignals oder des Messwertes, der vermittels des zweiten Paars von Thermoelementen LT3, LT4 bestimmt wurde, durchgeführt werden.

Wird der vorgegebene Schwellenwert erreicht oder überschritten, kann der Einfluss der parasitären Thermospannung U2 bspw. anhand des gemessenen Isolationswiderstandes $R_{ISO}$ kompensiert werden. Zur Bestimmung des Isolationswiderstandes $R_{ISO}$ kann bspw. zyklisch Strom und Spannung über die offene Leitung gemessen werden.

Da der Eingangswiderstand $R_M$ des Temperaturtransmitters bekannt ist, können die Widerstände $R_L$, $R_{ISO}$ und die Spannung $U_2$ bestimmt werden. Aus diesen Größen lässt sich dann die von der Verbindungsstelle zwischen dem zweiten Paar von Thermodrähten LT3, LT4 verursachte Spannung U1 und somit die Temperatur T1 an der Messstelle bestimmen.

Somit kann in einem ersten Betriebsmodus des Temperaturtransmitters AE der Einfluss der parasitären Thermospannung U2 kompensiert werden. Es kann ferner ein zweiter Betriebsmodus des Transmitters AE vorgesehen sein, in dem die parasitäre Thermospannung U2 überwacht wird, ohne dass eine Kompensation der Messung erfolgt. Während in einem dritten Betriebsmodus eine Messung der Thermospannung des zweiten Paares von Thermodrähten LT3, LT4 erfolgt, ohne dass Widerstand, Strom und/oder Spannung über die offene Leitung LT1, LT2 gemessen werden.

In dem ersten Betriebsmodus kann der Transmitter AE auf dem ersten Kanal K1 den Isolationswiderstand $R_{ISO}$ und die parasitäre Spannung U2 bestimmen. Dabei kann der erste Kanal K1 einmal als Messkanal zur Widerstandsmessung $R_{ISO}$ und einmal zur Erfassung der parasitären Thermospannung U2 verwendet werden.

Über den zweiten Kanal K2 kann eine Messung des Leitungswiderstands $R_L$ und die über den Innenwiderstand $R_M$ des Transmitters AE abfallende Spannung $U_3$ erfasst werden. Aus den gemessenen Größen lässt sich die von der Verbindungsstelle VS zwischen dem zweiten Paar von Thermodrähten LT3, LT4 herrührende Spannung $U_1$ wie folgt berechnen:

$$U_1 = U_3\left(1 + \frac{R_L}{R_M}\right) - \frac{R_L\left(U_2 - U_3\right)}{R_{iso}}$$

Das Absinken des Isolationswiderstands hängt jedoch nicht nur von dem Momentanwert der Temperatur sondern von dem Zeitraum ab, über den eine Temperatur auf die Thermodrähte LT1, LT2, LT3, LT4 bzw. den Isolator F einwirkt. Die Messung und Aufzeichnung des Isolationswiderstands $R_{ISO}$ des Leitungswiderstands ermöglicht somit eine Diagnose der Thermodrähte, bspw. des zweiten Paars von Thermodrähten LT3, LT4, durchzuführen und eine den Zustand der Thermodrähte LT3, LT4 kennzeichnende Meldung auszugeben.

Versuche haben zudem gezeigt, dass die parasitäre Spannung U2 sogar über den Wert der bei dieser Temperatur eigentlich zu erwartenden Thermospannung steigen kann. Dies ist ein Indiz dafür, dass es zu chemischen Umsetzungen der mineralisolierten Leitung oder allgemein einem Abbau der Thermodrähte LT1, LT2, LT3, LT4 gekommen ist. Derartige Umsetzungen beschränken ebenfalls die Haltbarkeit der verwendeten Thermodrähte LT1, LT2, LT3, LT4. Denn dadurch wird der Isolator zwischen den Thermodrähten LT1, LT2, LT3, LT4 zunehmend leitfähig und beginnt sich ähnlich wie ein Elektrolyt in einer Batterie zu verhalten. Dies kann dann zur Auflösung des Materials aus dem die Thermodrähte LT1, LT2, LT3, LT4 bestehen führen. Die Auswertung der vermittels des ersten Paars von Thermodrähten LT1, LT2 gemessenen parasitären Spannung U2 kann somit genutzt werden, um den Zustand der verwendeten Thermodrähte, insbesondere deren (verbleibende) Lebensdauer, zu bestimmen.

Die parasitäre Thermospannung U2 ist in Figur 3a und Figur 6a als zusätzliche Verbindung zwischen den Thermodrähten LT1, LT2, LT3, LT4 dargestellt, welche Verbindung zwischen der Verbindungsstelle VS und der Vergleichsstelle VG liegt -dies ist durch ein Oval, in dem sich eine Verbindung zwischen dem ersten Paar von Thermodrähten LT1, LT2 bzw. dem zweiten Paar von Thermodrähten LT3, LT4 befindet, gekennzeichnet.

Das erste und das zweite Paar von Thermodrähten LT1, LT2, LT3, LT4 können in ein Material das als Isolator F dient eingebettet sein. Durch diesen Isolator F sind sowohl das erste Paar von Thermodrähten LT1, LT2 als auch das zweite Paar von Thermodrähten LT3, LT4, dieses vollständig, voneinander getrennt (zumindest in dem Bereich in den sie in den Isolator eingebettet sind). Durch den Isolator F sind also nicht nur die einzelnen Thermodrähte eines Paares LT1, LT2 sondern auch die Paare untereinander getrennt. Es ist jedoch zur Umsetzung der Erfindung auch möglich nur ein Paar von Thermodrähten LT1, LT2 zu verwenden, die vollständig voneinander getrennt sind.

Das erste und das zweite Paar LT1, LT2, LT3, LT4 sind dabei vorzugsweise wie bspw. in Figur 6a dargestellt in ein und derselben Hülle H angeordnet, die zumindest teilweise mit dem Isolator F gefüllt ist. Das erste und das zweite Paar LT1, LT2, LT3, LT4 verlaufen dabei bevorzugt parallel zueinander in dem Bereich, in dem sie in der Hülse angeordnet sind. Die Hülse kann ein bspw. durch einen Boden insbesondere in Form einer Kappe geschlossenes Ende aufweisen. Ferner kann die Hülse H ein offenes Ende aufweisen, durch welches die Thermodrähte LT1, LT2 bzw. LT3, LT4, vorzugsweise die freien Enden der Thermodrähte LT1, LT2 bzw. LT3, LT4 oder an die Thermodrähte angeschlossenen Anschlussleitungen (nicht gezeigt) geführt sind.

## Patentansprüche

1. Messanordnung umfassend ein erstes Paar von Thermodrähten (LT1, LT2),
wobei die beiden Thermodrähte (LT1, LT2) des ersten Paares vollständig durch einen Isolator (F), wie bspw. ein Material, das zur elektrischen Isolierung zwischen den beiden Thermodrähten (LT1, LT2) des ersten Paares dient, voneinander getrennt sind,
wobei die beiden Thermodrähte (LT1, LT2) des ersten Paares keine Verbindungsstelle (VS), die zur Bestimmung der Temperatur dient, aufweisen, an der sie elektrisch miteinander verbunden sind, sondern freie Enden aufweisen,
wobei die beiden Thermodrähte (LT1, LT2) des ersten Paares dazu dienen, eine erste, insbesondere parasitäre, Thermospannung (U2), bspw. als Referenzspannung für eine zweite Thermospannung (U3), zu erfassen,
wobei die Messanordnung ein zweites Paar von Thermodrähten (LT3, LT4) aufweist,
wobei die beiden Thermodrähte (LT3, LT4) des zweiten Paares an einer Verbindungstelle (VS) elektrisch miteinander verbunden sind, und dazu dienen, eine zweite Thermospannung (U3) bereitzustellen,
wobei das erste Paar von Thermodrähten (LT1, LT2) elektrisch von dem zweiten Paar von Thermodrähten (LT3, LT4) isoliert ist, und
wobei eine Auswerteschaltung (AE) vorgesehen ist, die dazu dient, die erste Thermospannung (U2) und die zweite Thermospannung (U3) zu erfassen.

**2.** Anordnung nach Anspruch 1,
wobei das zweite Paar von Thermodrähten (LT3, LT4) entlang einer Wegstrecke verläuft,
und wobei das erste Paar von Thermodrähten (LT1, LT2) entlang zumindest eines Teils dieser Wegstrecke, vorzugsweise bis zur Verbindungsstelle (VS) des zweiten Paares von Thermodrähten (LT3, LT4), verläuft.

**3.** Anordnung nach einem der vorherigen Ansprüche,
wobei das erste und/oder das zweite Paar von Thermodrähten (LT1, LT2, LT3, LT4) zumindest teilweise in ein elektrisch isolierendes Material (F) eingebettet sind, welches isolierende Material (F) von einer, vorzugsweise metallischen, Hülse (H) umgeben ist.

**4.** Anordnung nach dem vorherigen Anspruch,
wobei die Hülse (H) in einem Schutzrohr angeordnet ist.

**5.** Anordnung nach einem der vorherigen Ansprüche,
wobei zumindest drei Thermodrähte (LT1, LT3, LT4) vorgesehen sind, und wobei ein erster und ein zweiter dieser drei Thermodrähte (LT3, LT1) das erste Paar bilden,
und wobei der erste und ein dritter dieser drei Thermodrähte (LT3, LT4) das zweite Paar bilden, oder
wobei vier Thermodrähte (LT1, LT2, LT3, LT4) vorgesehen sind, und ein erster und ein zweiter dieser vier Thermodrähte (LT1, LT2) das erste Paar bilden,
und ein dritter und ein vierter dieser vier Drähte (LT3, LT4) das zweite Paar bilden.

**6.** Anordnung nach einem der vorherigen Ansprüche,
wobei die erste Thermospannung (U2) dazu dient, eine Diagnosemeldung bzgl. des Zustands des zweiten Paars an Thermodrähten (LT3, LT4) bzw. eines Messsignals zu erzeugen.

**7.** Anordnung nach einem der vorherigen Ansprüche,
wobei die erste Thermospannung (U2) zur Korrektur eines in der zweiten Thermospannung (U3) enthaltenen Fehleranteils dient, welcher Fehleranteil insbesondere auf dem Vorliegen einer virtuellen Vergleichsstelle (VJ) zwischen dem zweiten Paar an Thermodrähten (LT3, LT4) beruht.

**8.** Anordnung nach einem der vorherigen Ansprüche,
wobei das erste Paar von Thermodrähten (LT1, LT2) einen ersten Messkanal (K1) bildet,
und wobei das zweite Paar (LT3, LT4) von Thermodrähten einen zweiten Messkanal (K2) bildet,
und
wobei die Auswerteschaltung (AE) mit dem ersten und/oder dem zweiten Messkanal (K1, K2) verbindbar ist.

**9.** Anordnung nach einem der vorherigen Ansprüche,
wobei die Auswerteschaltung (AE), dazu dient, einen der Temperatur (T1) entsprechenden Spannungsanteil (U1) der zweiten Thermospannung (U3) als Messsignal zu erfassen.

**10.** Anordnung nach einem der vorherigen Ansprüche,
wobei die Auswerteschaltung (AE) dazu dient, einen elektrischen Widerstand ($R_L$) des ersten (LT1, LT2) und/oder des zweiten Paars von Thermodrähten (LT3, LT4) zu ermitteln.

**11.** Anordnung nach einem der vorherigen Ansprüche,
wobei die Auswerteschaltung (AE) ferner dazu dient, die zweite Thermospannung (U3) und den elektrischen Widerstand des zweiten Paares (LT3, LT4) und den elektrischen Widerstand ($R_L$) des ersten Paares von Thermodrähten (LT1, LT2) ereignisbezogen oder entsprechend einer zeitlichen Vorgabe, bspw. wiederkehrend, zu erfassen.

**12.** Anordnung nach einem der vorherigen Ansprüche,
wobei die Auswerteschaltung (AE) ferner dazu dient, die, vorzugsweise während des Betriebs der Messanordnung ermittelten Werte der zweiten Thermospannung (U3), den elektrischen Widerstand des zweiten Paares (LT3, LT4) und den elektrischen Widerstand des ersten Paares (LT1, LT2) von Thermodrähten, mit zumindest einem hinterlegten Wert zu vergleichen.

**13.** Verfahren zum Betreiben einer Messanordnung nach einem der vorherigen Ansprüche,
wobei die erste, insbesondere parasitäre, Thermospannung (U2), bspw. als Referenzspannung für die zweite Thermospannung (U3), vermittels des ersten Paares von Thermodrähten (LT1, LT2) erfasst wird,

wobei die zweite Thermospannung (U3) vermittels des zweiten Paars von Thermodrähten (LT3, LT4), das an einer Verbindungsstelle (VS) elektrisch miteinander verbunden ist, erfasst wird, und

wobei vermittels der Auswerteschaltung (AE) die erste, insbesondere parasitäre Thermospannung (U2) und/oder die zweite Thermospannung (U3) erfasst wird.

14. Verfahren nach Anspruch 13,
wobei eine Diagnosemeldung bzgl. des Zustands des zweiten Paars von Thermodrähten (LT3, LT4) anhand der ersten, insbesondere parasitären, Thermospannung (U2) ermittelt wird.

15. Verfahren nach Anspruch 13 oder 14,
wobei ein in der zweiten Thermospannung (U3) enthaltener Fehleranteil vermittels der ersten, insbesondere parasitären, Thermospannung (U2) bestimmt wird.

16. Verfahren nach dem vorherigen Anspruch,
wobei der Fehleranteil zur Korrektur eines anhand der zweiten Thermospannung (U3) bestimmten Messsignals verwendet wird, welcher Fehleranteil, insbesondere auf dem Vorliegen einer virtuellen Vergleichsstelle (VJ) zwischen den Thermodrähten (LT3, LT4) des zweiten Paars an Thermodrähten beruht.

## Claims

1. Measuring arrangement comprising a first pair of thermocouple wires (LT1, LT2),
wherein the two thermocouple wires (LT1, LT2) of the first pair are completely separated from one another by an insulator (F), such as a material that is used for electrical insulation between the two thermocouple wires (LT1, LT2) of the first pair,
wherein the two thermocouple wires (LT1, LT2) of the first pair do not have a connection point (VS) - which is used to determine the temperature - at which they are electrically interconnected, but have free ends,
wherein the two thermocouple wires (LT1, LT2) of the first pair are used to measure a first, primarily parasitic, thermoelectric voltage (U2), for example as a reference voltage for a second thermoelectric voltage (U3),
wherein the measuring arrangement has a second pair of thermocouple wires (LT3, LT4),
wherein the two thermocouple wires (LT3, LT4) of the second pair are electrically interconnected at a connection point (VS), and serve to make a second thermoelectric voltage (U3) available,
wherein the first pair of thermocouple wires (LT1, LT2) is electrically isolated from the second pair of thermocouple wires (LT3, LT4), and
wherein an evaluation circuit (AE) is provided which is used to measure the first thermoelectric voltage (U2) and the second thermoelectric voltage (U3).

2. Arrangement as claimed in Claim 1,
wherein the second pair of thermocouple wires (LT3, LT4) extend along a path and wherein the first pair of thermocouple wires (LT1, LT2) extend along at least a part of this path, preferably as far as the connection point (VS) of the second pair of thermocouple wires (LT3, LT4).

3. Arrangement as claimed in one of the previous claims,
wherein the first and/or the second pair of thermocouple wires (LT1, LT2, LT3, LT4) are at least partially embedded in an electrically isolating material (F), said isolating material (F) being surrounded by a sleeve (H), preferably a metallic sleeve.

4. Arrangement as claimed in the previous claim,
wherein the sleeve (H) is arranged in a protective tube.

5. Arrangement as claimed in one of the previous claims,
wherein at least three thermocouple wires (LT1, LT3, LT4) are provided, and
wherein a first and a second of these three thermocouple wires (LT3, LT1) form the first pair,
and wherein the first and a third of these thermocouple wires (LT3, LT4) form the second pair,
or
wherein four thermocouple wires (LT1, LT2, LT3, LT4) are provided and a first and a second of these four wires (LT1, LT2) form the first pair,
and a third and a fourth of these four wires (LT3, LT4) form the second pair.

6. Arrangement as claimed in one of the previous claims,
   wherein the first thermoelectric voltage (U2) is used to generate a diagnostic message with regard to the state of the second pair of thermocouple wires (LT3, LT4), or of a measuring signal.

7. Arrangement as claimed in one of the previous claims,
   wherein the first thermoelectric voltage (U2) is used to correct an error component in the second thermoelectric voltage (U3), said error component being based, in particular, on the presence of a virtual cold junction (VJ) between the second pair of thermocouple wires (LT3, LT4).

8. Arrangement as claimed in one of the previous claims,
   wherein the first pair of thermocouple wires (LT1, LT2) forms a first measuring channel (K1), and wherein the second pair of thermocouple wires (LT3, LT4) form a second measuring channel (K2),
   and
   wherein the evaluation circuit (AE) can be connected to the first and/or second measuring channel (K1, K2).

9. Arrangement as claimed in one of the previous claims,
   wherein the evaluation circuit (AE) is used to measure a voltage component (U1) of the second thermoelectric voltage (U3), which corresponds to the temperature (T1), as a measuring signal.

10. Arrangement as claimed in one of the previous claims,
    wherein the evaluation circuit (AE) is used to determine an electrical resistance ($R_L$) of the first pair (LT1, LT2) and/or of the second pair of thermocouple wires (LT3, LT4).

11. Arrangement as claimed in one of the previous claims,
    wherein the evaluation circuit (AE) is further used to measure the second thermoelectric voltage (U3) and the electrical resistance of the second pair of thermocouple wires (LT3, LT4) and the electrical resistance ($R_L$) of the first pair of thermocouple wires (LT1, LT2) in relation to an event or according to a time specification, for example in a recurrent manner.

12. Arrangement as claimed in one of the previous claims,
    wherein the evaluation circuit (AE) further serves to compare the values of the second thermoelectric voltage (U3), which are preferably determined during the operation of the measuring arrangement, the electrical resistance of the second pair of thermocouple wires (LT3, LT4) and the electrical resistance of the first pair of thermocouple wires (LT1, LT2), with at least one saved value.

13. Procedure to operate a measuring arrangement as claimed in one of the previous claims, wherein the first, particularly parasitic, thermoelectric voltage (U2), is determined, for example as a reference voltage for the second thermoelectric voltage (U3), by means of the first pair of thermocouple wires (LT1, LT2), wherein the second thermoelectric voltage (U3) is determined by means of the second pair of thermocouple wires (LT3, LT4), said pair being electrically interconnected at a connection point (VS), and
    wherein the first, particularly parasitic, thermoelectric voltage (U2) and/or the second thermoelectric voltage (U3) is/are measured by means of the evaluation circuit (AE).

14. Procedure as claimed in Claim 13,
    wherein a diagnostics message with regard to the state of the second pair of thermocouple wires (LT3, LT4) is determined on the basis of the first, particularly parasitic, thermoelectric voltage (U2).

15. Procedure as claimed in Claim 13 or 14,
    wherein an error component in the second thermoelectric voltage (U3) is determined by means of the first, particularly parasitic, thermoelectric voltage (U2).

16. Procedure as claimed in the previous claim,
    wherein the error component is used to correct a measuring signal determined using the second thermoelectric voltage (U3), said error component being based, in particular, on the presence of a virtual cold junction (VJ) between the thermocouple wires (LT3, LT4) of the second pair of thermocouple wires.

**Revendications**

1. Configuration de mesure comprenant une première paire de fils thermoélectriques (LT1, LT2), les deux fils thermoélectriques (LT1, LT2) de la première paire étant séparés totalement l'un par rapport à l'autre par un isolateur (F), comme p. ex. un matériau servant à l'isolation électrique entre les deux fils thermoélectriques (LT1, LT2) de la première paire,

   les deux fils thermoélectriques (LT1, LT2) de la première paire ne présentant aucun point de liaison (VS) - qui sert à la détermination de la température, point auquel ils sont reliés électriquement entre eux - mais présentant des extrémités libres,

   les deux fils thermoélectriques (LT1, LT2) de la première paire servant à mesurer une première tension thermoélectrique (U2), notamment parasite, par exemple en tant que tension de référence pour une deuxième tension thermoélectrique (U3), la configuration de mesure comprenant une deuxième paire de fils thermoélectriques (LT3, LT4),

   les deux fils thermoélectriques (LT3, LT4) de la deuxième paire étant reliés électriquement entre eux en un point de liaison (VS), et servant à mettre à disposition une deuxième tension thermoélectrique (U3),

   la première paire de fils thermoélectriques (LT1, LT2) étant isolée électriquement de la deuxième paire de fils thermoélectriques (LT3, LT4), et

   un circuit d'exploitation (AE) étant prévu pour mesurer la première tension thermoélectrique (U2) et la deuxième tension thermoélectrique (U3).

2. Configuration selon la revendication 1,
   pour laquelle la deuxième paire de fils thermoélectriques (LT3, LT4) s'étend le long d'un chemin, et pour laquelle la première paire de fils thermoélectriques (LT1, LT2) s'étend le long d'au moins une partie de ce chemin, de préférence jusqu'au point de liaison (VS) de la deuxième paire de fils thermoélectriques (LT3, LT4).

3. Configuration selon l'une des revendications précédentes,
   pour laquelle la première et la deuxième paire de fils thermoélectriques (LT1, LT2, LT3, LT4) sont incorporées au moins partiellement dans un matériau électriquement isolant (F), lequel matériau isolant (F) est entouré d'une douille (H), de préférence métallique.

4. Configuration selon la revendication précédente,
   pour laquelle la douille (H) est disposée dans un tube de protection.

5. Configuration selon l'une des revendications précédentes,
   pour laquelle au moins trois fils thermoélectriques (LT1, LT3, LT4) sont prévus, et pour laquelle un premier et un deuxième de ces trois fils thermoélectriques (LT3, LT1) forment la première paire,
   et pour laquelle le premier et le troisième de ces trois fils thermoélectriques (LT3, LT4) forment la deuxième paire, ou
   pour laquelle quatre fils thermoélectriques (LT1, LT2, LT3, LT4) sont prévus, et un premier et un deuxième de ces quatre fils thermoélectriques (LT1, LT2) forment la première paire,
   et un troisième et un quatrième de ces quatre fils (LT3, LT4) forment la deuxième paire.

6. Configuration selon l'une des revendications précédentes,
   pour laquelle la première tension thermoélectrique (U2) sert à générer un message de diagnostic concernant l'état de la deuxième paire de fils thermoélectriques (LT3, LT4), ou un signal de mesure.

7. Configuration selon l'une des revendications précédentes,
   pour laquelle la première tension thermoélectrique (U2) sert à la correction d'une part erronée contenue dans la deuxième tension thermoélectrique (U3), laquelle part erronée est basée sur la présence d'une jonction froide virtuelle (VJ) entre les fils de la deuxième paire de fils thermoélectriques (LT3, LT4).

8. Configuration selon l'une des revendications précédentes,
   pour laquelle la première paire de fils thermoélectriques (LT1, LT2) constitue un premier canal de mesure (K1), et pour laquelle la deuxième paire de fils thermoélectriques (LT3, LT4) constitue un deuxième canal de mesure (K2), et
   pour laquelle le circuit d'exploitation (AE) peut être relié avec le premier et/ou le deuxième canal de mesure (K1, K2).

9. Configuration selon l'une des revendications précédentes,

pour laquelle le circuit d'exploitation (AE) sert à mesurer en tant que signal de mesure une part de tension (U1) de la deuxième tension thermoélectrique (U3), correspondant à la température (T1).

10. Configuration selon l'une des revendications précédentes, pour laquelle le circuit d'exploitation (AE) sert à déterminer une résistance électrique ($R_L$) de la première paire (LT1, LT2) et/ou de la deuxième paire de fils thermoélectriques (LT3, LT4).

11. Configuration selon l'une des revendications précédentes, pour laquelle le circuit d'exploitation (AE) sert en outre à mesurer la deuxième tension thermoélectrique (U3) et la résistance électrique de la deuxième paire de fils thermoélectriques (LT3, LT4) et la résistance électrique ($R_L$) de la première paire de fils thermoélectriques (LT1, LT2) en fonction d'événements ou selon une spécification de temps, par exemple de façon récurrente.

12. Configuration selon l'une des revendications précédentes, pour laquelle le circuit d'exploitation (AE) sert en outre à comparer, de préférence pendant le fonctionnement de la configuration de mesure, les valeurs déterminées de la deuxième tension thermoélectrique (U3), la résistance électrique de la deuxième paire de fils thermoélectriques (LT3, LT4) et la résistance électrique de la première paire de fils thermoélectriques (LT1, LT2), avec au moins une valeur enregistrée.

13. Procédé destiné à l'exploitation d'une configuration de mesure selon l'une des revendications précédentes, pour lequel la première tension thermoélectrique (U2), notamment parasite, est déterminée, par exemple en tant que tension de référence pour la deuxième tension thermoélectrique (U3), au moyen de la première paire de fils thermoélectriques (LT1, LT2), pour lequel la deuxième tension thermoélectrique (U3) est mesurée au moyen de la deuxième paire de fils thermoélectriques (LT3, LT4), laquelle est reliée électriquement entre elle au niveau d'une jonction froide virtuelle (VS), et pour lequel la première tension thermoélectrique (U2), notamment parasite, et/ou la deuxième tension thermoélectrique (U3) est/sont mesurée(s) au moyen du circuit d'exploitation (AE).

14. Procédé selon la revendication 13, pour lequel un message de diagnostic concernant l'état de la deuxième paire de fils thermoélectriques (LT3, LT4) est déterminé sur la base de la première tension thermoélectrique (U2), notamment parasite.

15. Procédé selon la revendication 13 ou 14, pour lequel une part erronée contenue dans la deuxième tension thermoélectrique (U3) est déterminée au moyen de la première tension thermoélectrique (U2), notamment parasite.

16. Procédé selon la revendication précédente, pour lequel la part erronée est utilisée pour la correction d'un signal de mesure déterminé au moyen de la deuxième tension thermoélectrique (U3), laquelle part erronée est basée sur la présence d'une jonction froide virtuelle (VJ) entre les fils thermoélectriques (LT3, LT4) de la deuxième paire de fils thermoélectriques.

VS  TE  LT3  VG  AE

T1  H  F  T2  LT4

## Fig. 1

VS  TE  LT3  K2  AE

H  F  LT4  VG

K1  ## Fig. 2a

$R_L$

$U1$  $R_M$

## Fig. 2b

Fig. 3a

Fig. 3b

Fig. 4

Fig. 5

Fig. 6a

Fig. 6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6344747 B1
- WO 0106574 A1
- JP 3177887 U
- JP H1048061 A
- JP H10232171 A
- JP 2010256166 A
- JP H10232170 A